# EUROPEAN PATENT SPECIFICATION

(11) **EP 3 059 789 B1**
(45) Date of publication and mention of the grant of the patent: **16.09.2020**
(21) Application number: 16155407.6
(22) Date of filing: 12.02.2016
(51) Int. Cl.: H01M 4/14, H01M 4/62, H01M 10/06

(54) **LEAD-ACID BATTERY**
BLEI-SÄURE-BATTERIE
BATTERIE AU PLOMB-ACIDE

(30) Priority: 18.02.2015 JP 2015029555; 21.12.2015 JP 2015248243
(43) Date of publication of application: 24.08.2016
(73) Proprietor: GS Yuasa International Ltd., Kisshoin, Minami-ku, Kyoto-shi, Kyoto 601-8520 (JP)
(72) Inventor: INAGAKI, Satoshi, Kyoto, 601-8520 (JP); KYO, Masaaki, Kyoto, 601-8520 (JP)
(74) Representative: Isarpatent

(56) References cited:
- EP-A1- 0 352 115
- EP-A1- 3 059 796
- EP-A1- 3 389 130
- EP-A1- 3 389 131
- JP-A- 2006 049 025
- JP-A- 2015 005 528
- JP-B1- 5 190 562

## Description

The present invention relates to a lead-acid battery, and particularly to a lead-acid battery which is used in an environment involving the discharge.

JP 2015 005 528 A discloses a lead-acid battery comprising a negative electrode material containing up to 2,5wt% graphite, up to 1,2wt% fibrous graphite and 0.6wt% BaS04. The battery comprises 8 negative plates containing each 52g of negative electrode material and 7 positive plates containing each 55g of positive electrode material. The electrolyte contains Li and Al ions. A graphite particle size of 45µm is disclosed.

### BACKGROUND

With the advent of idling-stop vehicles, lead-acid batteries have been deeply discharged more often than before. For example, lead-acid batteries of idling-stop vehicles are based on the premise that they are used in a partial state of charge (PSOC). Lead-acid batteries for cycle applications like those for forklift trucks have been used at a deep depth of discharge (DOD). When a lead-acid battery is used in a partial state of charge, its life is reduced due to accumulation of lead sulfate in a positive electrode or sulfation of a negative electrode. In the partial state of charge, agitation of an electrolyte solution by gas evolution is insufficient, and thus the electrolyte solution is easily stratified. This further reduces the life of a lead-acid battery.

Meanwhile, when the lead-acid battery transitions into an overdischarged state from the partial state of charge because, for example, the vehicle is left unattended for a long period of time, metal lead passes through the separator, and thus a permeation short circuit, in which both positive and negative electrode plates are short-circuited, easily occurs. The concentration of sulfate ions in the electrolyte solution decreases due to overdischarge, and correspondingly, the concentration of lead ions in the electrolyte solution increases. The lead ions are reduced on the negative electrode plate during charge, and metal lead dendrite grows through pores inside the separator, and thus passes through the separator to short-circuit the positive electrode plate and the negative electrode plate.

The applicant proposed improvement of the life of a lead-acid battery in the PSOC by including graphite in a negative electrode material. For example, Patent

Document 1 (WO 2011/90113) discloses that a negative electrode material is made to contain 0.02 to 2.20 mass% of graphite, 0.5 mass% of barium sulfate, and 0.02 to 2.20 mass% of carbon black. Patent Document 2 (WO 2011/52438) discloses that a negative electrode material is made to contain 0.5 to 3.0 mass% of expanded graphite and 0.6 mass% of barium sulfate. Among documents other than those by the applicant, for example, Patent Document 3 (JP5584216 B) discloses that a negative electrode material is made to contain 1 to 3 mass% of graphite, 0.8 mass% of barium sulfate, and 0.1 to 2 mass% of carbon black.

Patent Document 4 (JP5596241 B) discloses that a mass ratio M_{N}/M_{P} is in a range of from 0.70 to 1.10 where Mp is the mass of the positive active material, and M_{N} is the mass of the negative active material, per cell chamber.

### SUMMARY

Graphite particles form a path for electrons to lead sulfate, and thus facilitate charge at a negative electrode. The inventors have found, in the process of conducting studies on improvement of the PSOC life, that graphite in a negative electrode material causes a permeation short circuit. This can be because when a graphite particle is exposed to, or protrudes from, a surface of a negative electrode plate, the exposed portion or the like of the graphite particle serves as a center of precipitation of metal lead. As a result, metal lead dendrite may grow from an exposed graphite particle, and then pass through the separator to cause a short circuit. The fact that graphite in the negative electrode material causes a permeation short circuit was not known, and was first found by the present inventors. The present inventors have also found that, when the negative electrode material contains carbon fiber, the carbon fiber in the negative electrode material causes a permeation short circuit, similarly.

An object of the present invention is to provide a lead-acid battery that is:
- unlikely to be subjected to a permeation short circuit caused by graphite or carbon fiber, and
- excellent in life performance in an environment involving deep discharge, such as a PSOC.

The present invention provides a lead-acid battery as defined in independent claim 1.

### BRIEF DESCRIPTION OF DRAWINGS

Fig. 1 is a sectional view of a part of a lead-acid battery in an example.
Fig. 2 is a diagram showing a PSOC life test in the example.
Fig. 3 is a characteristic diagram showing the influence of the content of graphite (content of barium sulfate: 0.6 mass%, N/P ratio: 0.95).
Fig. 4 is a characteristic diagram showing the influence of the N/P ratio (content of barium sulfate: 0.6 mass%).
Fig. 5 is a characteristic diagram showing the influence of the N/P ratio (content of barium sulfate: 0.6 mass%).
Fig. 6 is a characteristic diagram showing the influence of the content of barium sulfate (content of graphite: 0.5 mass%, N/P ratio: 0.62).
Fig. 7 is a characteristic diagram showing the influence of the average particle size of graphite (content of graphite: 2.0 mass%, content of barium sulfate: 1.2 mass%, N/P ratio: 0.78).
Fig. 8 is a characteristic diagram showing the influence of the content of carbon black (content of graphite: 2.0 mass%, content of barium sulfate: 1.2 mass%, N/P ratio: 0.62).
Fig. 9 is a characteristic diagram showing the influence of the concentration of aluminum ions (content of graphite: 2.0 mass%, content of barium sulfate: 1.2 mass%, N/P ratio: 0.62).
Fig. 10 is a characteristic diagram showing the influence of the concentration of lithium ions (content of graphite: 2.0 mass%, content of barium sulfate: 1.2 mass%, N/P ratio: 0.62).

### DESCRIPTION OF EMBODIMENTS

An aspect of the present invention provides a lead-acid battery including a negative electrode plate, a positive electrode plate, and an electrolyte solution, wherein the negative electrode plate includes a negative electrode material containing graphite or carbon fiber, and a ratio N/P (hereinafter referred to as "N/P ratio") of a mass N of the negative electrode material to a mass P of the positive electrode material, per lead-acid battery, is 0.62 or more.

The graphite may not only be scalelike graphite or expanded graphite of Example, but may also be natural graphite such as scaly graphite or earthy graphite, or artificial graphite, or expansion graphite, etc. Scalelike graphite and expanded graphite are preferable, with scalelike graphite being particularly preferable. Expanded graphite is graphite that has been expanded. Carbon fiber has an effect similar to that of graphite. Carbon fiber to be used has, for example, a length in a range of 5 µm or more and 500 µm or less.

Graphite or carbon fiber (hereinafter referred to as "graphite or the like") in the negative electrode material facilitates reduction of lead sulfate deposited on a lower portion of a plate of a lead-acid battery, and thus improves life performance in a non-fully charged condition of the lead-acid battery, such as a PSOC life. A content of graphite or the like in the negative electrode material of 0.5 mass% or more significantly improves the PSOC life, and is thus preferred. On the other hand, it has been found that inclusion of graphite or the like in the negative electrode material causes a permeation short circuit to easily occur. It was not known that inclusion of graphite or the like in the negative electrode material of a lead-acid battery causes a permeation short circuit to easily occur.

Thus, the present inventors conducted studies on inhibition of occurrence of a permeation short circuit while graphite or the like is included in the negative electrode material to improve the PSOC life. As a result, it has been found that even when the negative electrode material contains graphite or the like, an N/P ratio of 0.62 or more can inhibit a permeation short circuit.

Inclusion of graphite or the like in the negative electrode material, and an N/P ratio in a range of 0.62 or more and 0.95 or less significantly improves the PSOC life, and thus the N/P ratio is in a range of 0.62 or more and 0.95 or less. An N/P ratio in a range of 0.62 or more and 0.78 or less more significantly improves the PSOC life, and thus the N/P ratio is more preferably in a range of 0.62 or more and 0.78 or less.

A content of graphite or the like in the negative electrode material of 2.5 mass% or less can inhibit a permeation short circuit, and is thus preferred. A content of graphite or the like in the negative electrode material of 2.0 mass% or less can further inhibit a permeation short circuit, and is thus more preferred.

Inclusion of barium sulfate in the negative electrode material can inhibit a permeation short circuit, and is thus preferred. Inclusion of 1.2 mass% or more of barium sulfate in the negative electrode material can markedly inhibit a permeation short circuit, and is thus more preferred.

Note that elemental barium or a barium compound such as barium carbonate may be used instead of barium sulfate. This is because elemental barium or a barium compound added to the negative electrode material changes to barium sulfate after the addition. Elemental barium or a barium compound is preferably added in an amount equivalent to 1.2 mass% or more of barium sulfate with respect to the mass of the negative electrode material in a fully-charged state. In terms of content equivalent to elemental barium, the addition is preferably performed so that the content of barium in the negative electrode material will be 0.7 mass% or more.

Inclusion of more than 3.0 mass% of barium sulfate in the negative electrode material markedly reduces the PSOC life. This cancels the effect of improving the PSOC life produced by inclusion of graphite or the like in the negative electrode material. Thus, the content of barium sulfate in the negative electrode material is preferably 3.0 mass% or less. In terms of content equivalent to elemental barium, the addition is performed so that the content of barium in the negative electrode material will be 1.75 mass% or less.

Inclusion of 2.5 mass% or less of graphite or the like in the negative electrode material, inclusion of 1.2 mass% or more of barium sulfate in the negative electrode material, and an N/P ratio of 0.62 or more can yield a lead-acid battery having excellent PSOC life performance and excellent permeation short circuit resistance performance, and are thus preferred. Inclusion of 2.0% or less of graphite or the like in the negative electrode material, inclusion of 1.2 mass% or more of barium sulfate in the negative electrode material, and an N/P ratio of 0.62 or more can yield a lead-acid battery having particularly excellent permeation short circuit resistance performance, and are thus more preferred.

Even when the negative electrode material contains 2.5 mass% or less of graphite or the like, the negative electrode material contains 1.2 mass% or more of barium sulfate, and the N/P ratio is 0.62 or more, a permeation short circuit may not be completely prevented. Thus, the present inventors have conducted studies on further inhibiting a permeation short circuit.

An average particle size of graphite in the negative electrode material of 300 µm or less can further inhibit a permeation short circuit, and therefore, the average particle size of graphite in the negative electrode material is preferably 300 µm or less.

An average particle size of graphite in the negative electrode material of 10 µm or more improves the PSOC life, and thus the average particle size of graphite in the negative electrode material is preferably 10 µm or more.

Preferably, the negative electrode material contains carbon black. By including carbon black in the negative electrode material, an effect of further inhibiting a permeation short circuit is obtained. The effect of carbon black of inhibiting a permeation short circuit is noticeable when the content of carbon black in the negative electrode material is 0.05 mass% or more, and thus the content of carbon black in the negative electrode material is preferably 0.05 mass% or more.

A content of carbon black in the negative electrode material of 0.1 mass% or more produces a larger effect of improving the PSOC life than when the content of carbon black in the negative electrode material is less than 0.1 mass%. Thus, the content of carbon black in the negative electrode material is preferably 0.1 mass% or more. A content of carbon black in the negative electrode material of 0.5 mass% or more produces an especially large effect of improving the PSOC life. Therefore, the content of carbon black in the negative active material is more preferably 0.5 mass% or more. A content of carbon black in the negative electrode material of more than 1.0 mass% causes the negative active material paste to be too hard to fill the current collector. Therefore, the content of carbon black in the negative electrode material is preferably 1.0 mass% or less.

Inclusion of aluminum ions in the electrolyte solution improves the PSOC life. Inclusion of 0.02 mol/L or more of aluminum ions in the electrolyte solution significantly improves the PSOC life. Thus, the concentration of aluminum ions in the electrolyte solution is preferably 0.02 mol/L or more. Inclusion of 0.2 mol/L or less of aluminum ions in the electrolyte solution significantly improves the PSOC life. Thus, the concentration of aluminum ions in the electrolyte solution is preferably 0.2 mol/L or less.

Inclusion of lithium ions in the electrolyte solution can further inhibit a permeation short circuit. This effect is significant when the electrolyte solution contains 0.02 mol/L or more of lithium ions. Thus, the concentration of lithium ions in the electrolyte solution is preferably 0.02 mol/L or more.

Inclusion of 0.1 mol/L or more of lithium ions in the electrolyte solution improves the PSOC life. Thus, the concentration of lithium ions in the electrolyte solution is preferably 0.1 mol/L or more. Moreover, inclusion of 0.2 mol/L or less of lithium ions in the electrolyte solution improves the PSOC life. Thus, the concentration of lithium ions in the electrolyte solution is preferably 0.2 mol/L or less.

Most preferably, the electrolyte solution contains aluminum ions and lithium ions.

The lead-acid battery of the present invention has excellent PSOC life performance and excellent permeation short circuit resistance performance, and is thus suitable as a lead-acid battery, such as for use in an idling-stop vehicle. The lead-acid battery of the present invention can be used not only for idling-stop vehicles etc., but also for cycle applications of, for example, forklift trucks. In Example, the lead-acid battery is a flooded-type lead-acid battery, but may also be a valve-regulated lead-acid battery. The lead-acid battery of the present invention is preferably a flooded-type lead-acid battery. The lead-acid battery of the present invention is less likely to cause a permeation short circuit even when it is used in a partial state of charge, and therefore, is suitable as a lead-acid battery to be used in a partial state of charge.

The best mode example according to the invention of the present application will be shown below. In embodying the present invention, the example can be appropriately changed based on common knowledge of a person skilled in the art and on disclosures of prior arts. In the example, the negative electrode material is also referred to as a negative active material, and the positive electrode material is also referred to as a positive active material. The negative electrode plate includes a negative electrode current collector (negative electrode grid) and a negative active material (negative electrode material), and the positive electrode plate includes a positive electrode current collector (positive electrode grid) and a positive active material (positive electrode material). Solid components other than the current collectors belong to the active materials (electrode materials).

### [Example]

The negative active material paste was produced by mixing a predetermined amount of graphite, a predetermined amount of barium sulfate, lignin as a shrink-proofing agent, and synthetic resin fibers as a reinforcing material with a lead powder produced by a ball milling method. Carbon black was further included in the resultant mixture to prepare another negative active material paste. Hereinafter, a content is expressed in a concentration (mass%) in a formed negative active material after full charge. The term "full charge" refers to a state in which charge has been performed at a 5-hour rate current until the terminal voltage during charge as measured every 15 minutes exhibits a particular value (±0.01 V) three times in succession.

The content of graphite was changed in a range of from 0 to 3.0 mass% with respect to the mass of the negative active material in a fully-charged condition. Although scalelike graphite and expanded graphite were used as graphite, other graphite such as earthy graphite and artificial graphite, and carbon fiber may also be used. Both graphite and carbon fiber have high electrical conductivities, and are composed of particles larger than those of carbon black or the like. Actions thereof in the negative active material are also considered similar to each other. Among graphite and carbon fiber, scalelike graphite or expanded graphite is preferred. In particular, scalelike graphite or expanded graphite having an average particle size in a range of 10 µm or more and 300 µm or less is preferred. The scalelike graphite and expanded graphite used had resistivities as measured by a four-terminal method in a range of from 0.001 Ω·cm to 0.01 Ω·cm (resistivities under pressure of 2.5 MPa).

The content of barium sulfate was changed in a range of from 0.6 mass% to 4.0 mass% with respect to the mass of the negative active material in a fully-charged condition. The barium sulfate used had an oil absorption capacity of 12.5 mL/100 g, an average primary particle size of 0.79 µm, and an average secondary particle size of 2.5 µm. However, properties of barium sulfate, such as the particle sizes, the oil absorption capacity, etc. are not limited. Barium sulfate has an average primary particle size of, for example, 0.3 µm or more and 2.0 µm or less, and an average secondary particle size of, for example, 1.0 µm or more and 10 µm or less. While the content of lignin was 0.2 mass%, the content is not limited. A synthetic shrink-proofing agent such as a condensate of a sulfonated bisphenol may be used in place of lignin. While the content of the reinforcing material was 0.1 mass%, the content and the type of the synthetic resin fibers are not limited. The method for producing a lead powder, the content of oxygen, and so on are not limited. Other additives such as a water-soluble synthetic polymer may be contained.

The above-mentioned mixture was formed into a paste with water and sulfuric acid. An expanded type of negative electrode grid (110 mm (height) × 100 mm (width) × 1.0 mm (thickness)) primarily composed of an antimony-free Pb-Ca-Sn-based alloy was filled with this paste, which was then cured and dried. The negative electrode grid may also be a cast grid, a punched grid, or the like. The mass of the negative active material of each negative electrode plate was made the same by dividing the mass of the negative active material per cell shown in Tables 3 to 6 by the number of negative electrode plates. In addition, the mass of the negative active material per cell was made the same for all the cells. The density of the negative active material after formation is in a range of, for example, 3.6 g/cm³ or more and 4.0 g/cm³ or less. The amount of the filling negative active material per one negative electrode plate is in a range of, for example, 30 g or more and 70 g or less.

Synthetic resin fibers of a reinforcing material in an amount of 0.1 mass% with respect to the mass of the formed positive active material in a fully-charged condition were mixed with a lead powder produced by a ball milling method, and the resulting mixture was formed into a paste with water and sulfuric acid, and was used as the positive active material paste. An expanded type of positive electrode grid (110 mm (height) × 100 mm (width) × 1.2 mm (thickness)) primarily composed of an antimony-free Pb-Ca-Sn-based alloy was filled with this paste, which was then cured and dried. The type of the lead powder and production conditions are not limited. The grid may also be a cast grid, a punched grid, or the like. The composition (components other than lead dioxide) of the positive active material is not limited. For example, the positive active material may contain antimony. The mass of the positive active material of each positive electrode plate was made the same by dividing the mass of the positive active material per cell shown in Tables 3 to 6 by the number of positive electrode plates. In addition, the mass of the positive active material per cell was made the same for all the cells. The density of the positive active material after formation is in a range of, for example, 3.5 g/cm³ or more and 4.8 g/cm³ or less.

An unformed negative electrode plate was wrapped with a polyethylene separator with ribs protruding from a base, and seven unformed negative electrode plates and six unformed positive electrode plates were alternately layered. The negative electrode plates and the positive electrode plates were connected to one another with a strap to prepare an element. The separator is primarily composed of, for example, a synthetic resin. The thickness of the base, the total thickness, and the like are not limited. The thickness of the base of the separator was 0.25 mm, but may be in a range of, for example, 0.15 mm or more and 0.25 mm or less. The interval between a positive electrode plate and a negative electrode plate is in a range of, for example, 0.5mm or more and 0.9mm or less. Six elements connected in series were placed in a cell chamber of a container, and sulfuric acid with a specific gravity of 1.230 at 20°C was added to perform formation in the container, thereby preparing a flooded-type lead-acid battery having a B20 size and a 5-hour rate capacity of 30 Ah.

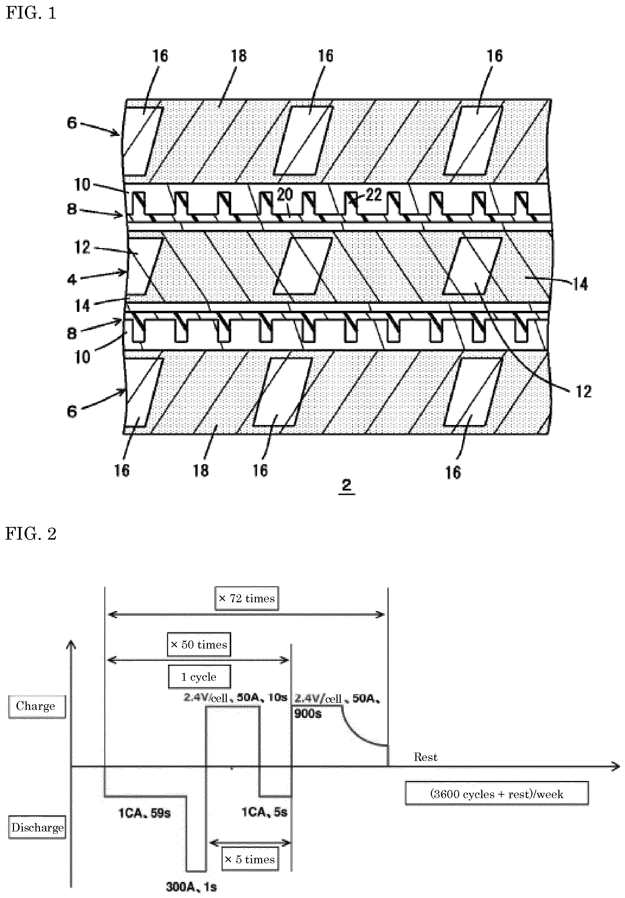

Fig. 1 shows a part of a lead-acid battery 2. Reference numeral 4 denotes a negative electrode plate, reference numeral 6 denotes a positive electrode plate, reference numeral 8 denotes a separator, and reference numeral 10 denotes an electrolyte solution mainly composed of sulfuric acid. The negative electrode plate 4 includes a negative electrode grid 12 and a negative active material 14. The positive electrode plate 6 includes a positive electrode grid 16 and a positive active material 18. The separator 8 is in the form of a bag including a base 20 and ribs 22. The negative electrode plate 4 is stored in the bag, and the ribs 22 face the positive electrode plate 6 side. However, the positive electrode plate 6 may be stored in the separator 8 with the ribs 22 facing the positive electrode plate. The separator is not required to be in the form of a bag as long as it isolates the positive electrode plate and the negative electrode plate from each other; the separator may be, for example, a leaflet-like glass mat or retainer mat.

The mass of the positive active material and the mass of the negative active material, of the lead-acid battery 2, are determined as follows. The lead-acid battery 2 in a fully-charged condition is disassembled, and the negative electrode plate 4 is washed with water, and then dried, to remove the sulfuric acid component. Thus, the negative active material 14 is collected, and the mass of the negative active material per one negative electrode plate is measured. In a similar manner, the positive active material 18 is collected, and the mass of the positive active material per one positive electrode plate is measured. The ratio of the sum of the mass of the active material of all the negative electrode plates to the sum of the mass of the active material of all the positive electrode plates is deemed as the ratio N/P of the mass N of the negative electrode material to the mass P of the positive electrode plate per lead-acid battery.

The content of barium contained in a formed negative active material is quantitatively determined as follows. The lead-acid battery 2 in a fully-charged condition is disassembled, and the negative electrode plate 4 is washed with water, and then dried, to remove the sulfuric acid component. Thus, the negative active material 14 is collected. The negative active material is crushed, and hydrogen peroxide water having a concentration of 300 g/L is added thereto in an amount of 20 mL per 100 g of the negative active material, and (1+3) nitric acid that is obtained by diluting 1 part by volume of 60 mass% concentrated nitric acid with 3 parts by volume of ion-exchange water is further added. The mixture is then heated with stirring for five hours to allow lead to dissolve in the form of lead nitrate. Barium sulfate is further dissolved. The concentration of barium in the resultant solution is quantitatively determined by atomic absorption spectrometry, and the result is converted into the content of barium in the negative active material. The content of barium in the negative active material can then provide the content of barium sulfate in the negative active material.

The contents of graphite and of carbon black contained in the formed negative active material are quantitatively determined as follows. The lead-acid battery 2 is in a fully-charged condition is disassembled, and the negative electrode plate 4 is washed with water, and then dried, to remove the sulfuric acid component. Thus, the negative active material 14 is collected. The negative active material is crushed, and hydrogen peroxide water having a concentration of 300 g/L is added thereto in an amount of 20 mL per 100 g of the negative active material, and (1+3) nitric acid that is obtained by diluting 1 part by volume of 60 mass% concentrated nitric acid with 3 parts by volume of ion-exchange water is further added. The mixture is then heated with stirring for five hours to allow lead to dissolve in the form of lead nitrate. Barium sulfate is further dissolved. Filtration is then performed to separate graphite, carbon black, and the reinforcing material.

Solid components obtained by filtration (graphite, carbon black, and the reinforcing material) are dispersed in water. Using a sieve that retains the reinforcing material, such as, for example, a sieve having an aperture of 1.4 mm, the dispersion solution is sieved twice, and then washed with water to remove the reinforcing material, thereby separating carbon black and graphite.

An organic shrink-proofing agent, such as lignin, is added to the negative active material paste together with carbon black and graphite. Due to the surface-active effect of the organic shrink-proofing agent, carbon black and graphite remain in a non-aggregated state in the negative active material even after formation. However, since the organic shrink-proofing agent is dissolved in water and lost in the series of separation operations, carbon black and graphite are dispersed in water, the organic shrink-proofing agent is then added, and the mixture is stirred to disaggregate again the aggregates of carbon black and of graphite, after which the following separation operation is performed.

The organic shrink-proofing agent is not limited as long as it can be added to a lead-acid battery. In Example, a lignin sulfonate Vanillex N (manufactured by NIPPON PAPER INDUSTRIES CO., LTD.) was used. In Example, 15 g of the organic shrink-proofing agent was added to 100 mL of water, and a stirring operation was performed.

After the aforementioned operation, carbon black and graphite were separated from each other by making suspension containing carbon black and graphite pass through a sieve that does not substantially allow graphite to pass therethrough, but allows carbon black to pass therethrough. In Example, a sieve with an aperture of 20 µm was used. Even when graphite having a particle size of less than this aperture is used, graphite having a particle size of 3 µm or more causes clogging of the sieve, and thus such graphite will not substantially pass through the sieve. After this operation, graphite remains on the sieve, and carbon black is contained in the liquid that has passed through the sieve. Graphite and carbon black separated by the series of operations are washed with water and dried, and are then each weighed. Carbon fiber can be separated in a manner similar to that of graphite.

The average particle size (volume average size) of graphite is measured by a light scattering method while the separated graphite is dispersed again in water to which an organic shrink-proofing agent has been added. A region corresponding to a particle size of less than 3 µm, if any, is ignored as that of an impurity such as carbon black. Aluminum ions and lithium ions in the electrolyte solution are quantitatively determined by extracting the electrolyte solution, and then using ICP emission spectrometry.

A permeation short circuit accelerating test and a PSOC life test were conducted on the lead-acid battery 2 in a fully-charged condition. Details of the PSOC life test are shown in Fig. 2 and in Table 1. The denotation 1 CA means, for example, 30 A for a battery having a 5-hour rate capacity of 30 Ah. The term 40°C air indicates that the test was conducted in an air bath at 40°C. The number of cycles until the terminal voltage reaches 1.2 V/cell in the test pattern in Table 1 is defined as a PSOC life. Details of the permeation short circuit accelerating test are shown in Table 2. This test is a test that is conducted under conditions that promote occurrence of a permeation short circuit. Thus, the rate of occurrence of a permeation short circuit is significantly higher than that under the actual conditions of use of the lead-acid battery. Five cycles of the permeation short circuit accelerating test pattern shown in Table 2 were conducted. After the 5 cycles, the lead-acid batteries were disassembled to determine the ratio of lead-acid batteries in which short circuits have occurred. The term 25°C water indicates that the test was conducted in a water bath at 25°C. In Tables 1 and 2, CC discharge, CV charge, and CC charge respectively mean constant current discharge, constant voltage charge, and constant current charge.

**[Table 1]**

| Step | Details | Test conditions | | Temperature |
|---|---|---|---|---|
| | | Current and voltage | Stop condition | |
| 1 | CC discharge | 1 CA | 59 sec. | 40°C air |
| 2 | CC discharge | 300 A | 1 sec. | 40°C air |
| 3 | CV charge | 2.4 V/cell, max. 50 A | 10 sec. | 40°C air |
| 4 | CC discharge | 1 CA | 5 sec. | 40°C air |
| 5 | Repeat steps 3 and 4 | 5 times | | 40°C air |
| 6 | Repeat steps 1 - 5 | 50 times | | 40°C air |
| 7 | CV charge | 2.4 V/cell, max. 50 A | 900 sec. | 40°C air |
| 8 | Repeat steps 1 - 7 | 72 times | | 40°C air |
| 9 | Rest | 15h | | 40°C air |
| 10 | Return to step 1 | - | | 40°C air |

**[Table 2]**

| Step | Details | Test conditions | | Temperature |
|---|---|---|---|---|
| | | Current and voltage | Stop condition | |
| 1 | CC discharge | 0.05 CA | 1.0 V/cell | 25°C water |
| 2 | Left with Resistance connected | 10 Ω | 28 days | 25°C water |
| 3 | CV charge | 2.4 V/cell, max. 50 A | 10 min. | 25°C water |
| 4 | CC charge | 0.05 CA | 27 hours | 25°C water |
| 5 | Repeat steps 1 - 4 | 5 times | | 25°C water |

The results of the PSOC life test and of the permeation short circuit accelerating test are shown in Tables 3 to 7, in which the percentages of the contents are each a percentage by mass (mass%). Table 3 shows the results when scalelike graphite was used, and Table 4 shows the results when expanded graphite was used. In both cases, the negative active materials did not contain carbon black, and the electrolyte solutions did not contain aluminum ions nor lithium ions. The data of the PSOC life in Tables 3 and 4 are shown in relative values with respect to the values of the samples listed on top of the respective tables, with these values defined as 100%.

**[Table 3]**

| Battery no. | Mass of positive active material (g/cell) | Mass of negative active material (g/cell) | N/P ratio | Scalelike graphite | | BaSO₄ | PSOC life Number of cycles (ratio to A1 defined as 100) | Permeation short circuit occurrence rate (%) |
|---|---|---|---|---|---|---|---|---|
| | | | | Content (%) | Average particle size (µm) | Content (%) | | |
| A1 | 338 | 320 | 0.95 | 0.5 | 150 | 0.6 | 100 | 40 |
| A2 | 375 | 294 | 0.78 | | | | 106 | 50 |
| A3 | 420 | 261 | 0.62 | | | | 110 | 60 |
| A4 | 427 | 256 | 0.60 | | | | 84 | 100 |
| A5 | 331 | 325 | 0.98 | | | | 80 | 40 |
| A6 | 338 | 320 | 0.95 | 0 | - | 0.6 | 80 | 20 |
| A7 | 375 | 294 | 0.78 | | | | 84 | 20 |
| A8 | 420 | 261 | 0.62 | | | | 86 | 20 |
| A9 | 427 | 256 | 0.60 | | | | 78 | 20 |
| A10 | 331 | 325 | 0.98 | | | | 70 | 20 |
| A11 | 338 | 320 | 0.95 | 2.0 | 150 | 0.6 | 109 | 40 |
| A12 | 375 | 294 | 0.78 | | | | 114 | 60 |
| A13 | 420 | 261 | 0.62 | | | | 121 | 60 |
| A14 | 338 | 320 | 0.95 | 3.0 | 150 | 0.6 | 110 | 100 |
| A15 | 420 | 261 | 0.62 | | | | 120 | 100 |
| B1 | 338 | 320 | 0.95 | 0.5 | 150 | 1.0 | 100 | 40 |
| B2 | | | | | | 1.2 | 104 | 0 |
| B3 | | | | | | 2.0 | 106 | 0 |
| B4 | | | | | | 3.0 | 106 | 0 |
| B5 | | | | | | 4.0 | 87 | 0 |
| B6 | 375 | 294 | 0.78 | 0.5 | 150 | 1.2 | 107 | 0 |
| B7 | | | | | | 2.0 | 109 | 0 |
| B8 | | | | | | 3.0 | 109 | 0 |
| B9 | 420 | 261 | 0.62 | 0.5 | 150 | 1.0 | 110 | 60 |
| B10 | | | | | | 1.2 | 113 | 0 |
| B11 | | | | | | 2.0 | 114 | 0 |
| B12 | | | | | | 3.0 | 114 | 0 |
| B13 | | | | | | 4.0 | 90 | 0 |
| B14 | 427 | 256 | 0.60 | 0.5 | 150 | 3.0 | 86 | 60 |
| B15 | 331 | 325 | 0.98 | 0.5 | 150 | 3.0 | 84 | 0 |
| B16 | 338 | 320 | 0.95 | 0 | - | 3.0 | 84 | 0 |
| B17 | 420 | 261 | 0.62 | 0 | - | 3.0 | 89 | 0 |
| B18 | 338 | 320 | 0.95 | 1.5 | 150 | 2.0 | 109 | 0 |
| B19 | 338 | 320 | 0.95 | 2.0 | 150 | 1.0 | 109 | 40 |
| B20 | | | | | | 1.2 | 112 | 0 |
| B21 | | | | | | 3.0 | 115 | 0 |
| B22 | | | | | | 4.0 | 91 | 0 |
| B23 | 375 | 294 | 0.78 | 2.0 | 150 | 1.2 | 120 | 0 |
| B24 | | | | | | 3.0 | 122 | 0 |
| B25 | 420 | 261 | 0.62 | 1.5 | 150 | 2.0 | 121 | 0 |
| B26 | 420 | 261 | 0.62 | 2.0 | 150 | 1.0 | 121 | 60 |
| B27 | | | | | | 1.2 | 125 | 10 |
| B28 | | | | | | 3.0 | 126 | 0 |
| B29 | | | | | | 4.0 | 96 | 0 |
| B30 | 338 | 320 | 0.95 | 3.0 | 150 | 3.0 | 124 | 40 |
| B31 | 420 | 261 | 0.62 | 3.0 | 150 | 3.0 | 124 | 60 |

**[Table 4]**

| Battery no. | Mass of positive active material (g/cell) | Mass of negative active material (g/cell) | N/P ratio | Expanded graphite | | BaSO₄ | PSOC life Number of cycles (ratio to D1 defined as 100) | Permeation short circuit occurrence rate (%) |
|---|---|---|---|---|---|---|---|---|
| | | | | Content (%) | Average particle size (µm) | Content (%) | | |
| D1 | 338 | 320 | 0.95 | 0.5 | 150 | 0.6 | 100 | 30 |
| D2 | 375 | 294 | 0.78 | | | | 106 | 50 |
| D3 | 420 | 261 | 0.62 | | | | 108 | 50 |
| D4 | 427 | 256 | 0.60 | | | | 82 | 100 |
| D5 | 331 | 325 | 0.98 | | | | 78 | 40 |
| D6 | 338 | 320 | 0.95 | 2.0 | 150 | 0.6 | 108 | 40 |
| D7 | 375 | 294 | 0.78 | | | | 116 | 50 |
| D8 | 420 | 261 | 0.62 | | | | 120 | 50 |
| D9 | 338 | 320 | 0.95 | 3.0 | 150 | 0.6 | 109 | 100 |
| D10 | 420 | 261 | 0.62 | | | | 118 | 100 |
| D11 | 338 | 320 | 0.95 | 0.5 | 5 | 0.6 | 93 | 20 |
| D12 | | | | | 10 | | 100 | 30 |
| D13 | | | | | 300 | | 100 | 30 |
| D14 | | | | | 500 | | 91 | 50 |
| D15 | 375 | 294 | 0.78 | 0.5 | 5 | 0.6 | 105 | 40 |
| D16 | | | | | 500 | | 103 | 70 |
| D17 | 420 | 261 | 0.62 | 2.0 | 5 | 0.6 | 110 | 40 |
| D18 | | | | | 10 | | 115 | 50 |
| D19 | | | | | 300 | | 116 | 60 |
| D20 | | | | | 500 | | 108 | 70 |
| E1 | 338 | 320 | 0.95 | 0.5 | 150 | 1.0 | 100 | 30 |
| E2 | | | | | | 1.2 | 103 | 0 |
| E3 | | | | | | 3.0 | 105 | 0 |
| E4 | | | | | | 4.0 | 84 | 0 |
| E5 | 375 | 294 | 0.78 | 0.5 | 150 | 1.2 | 108 | 0 |
| E6 | | | | | | 3.0 | 110 | 0 |
| E7 | 420 | 261 | 0.62 | 0.5 | 150 | 1.0 | 108 | 50 |
| E8 | | | | | | 1.2 | 111 | 0 |
| E9 | | | | | | 3.0 | 112 | 0 |
| E10 | | | | | | 4.0 | 86 | 0 |
| E11 | 427 | 256 | 0.60 | 0.5 | 150 | 3.0 | 81 | 60 |
| E12 | 331 | 325 | 0.98 | 0.5 | 150 | 3.0 | 80 | 0 |
| E13 | 338 | 320 | 0.95 | 2.0 | 150 | 1.0 | 105 | 40 |
| E14 | | | | | | 1.2 | 106 | 0 |
| E15 | | | | | | 3.0 | 102 | 0 |
| E16 | | | | | | 4.0 | 85 | 0 |
| E17 | 375 | 294 | 0.78 | 2.0 | 150 | 1.2 | 115 | 0 |
| E18 | | | | | | 3.0 | 115 | 0 |
| E19 | 420 | 261 | 0.62 | 2.0 | 150 | 1.0 | 117 | 50 |
| E20 | | | | | | 1.2 | 119 | 0 |
| E21 | | | | | | 3.0 | 120 | 0 |
| E22 | | | | | | 4.0 | 91 | 0 |
| E23 | 338 | 320 | 0.95 | 3.0 | 150 | 3.0 | 118 | 40 |
| E24 | 420 | 261 | 0.62 | 3.0 | 150 | 3.0 | 124 | 60 |
| F1 | 338 | 320 | 0.95 | 0.5 | 5 | 1.2 | 96 | 0 |
| F2 | | | | | | 3.0 | 95 | 0 |
| F3 | | | | | 10 | 1.2 | 103 | 0 |
| F4 | | | | | | 3.0 | 105 | 0 |
| F5 | | | | | 300 | 1.2 | 102 | 0 |
| F6 | | | | | | 3.0 | 102 | 0 |
| F7 | | | | | 500 | 1.2 | 97 | 0 |
| F8 | | | | | | 3.0 | 95 | 0 |
| F9 | 420 | 261 | 0.62 | 2.0 | 5 | 1.2 | 114 | 0 |
| F10 | | | | | | 3.0 | 115 | 0 |
| F11 | | | | | 10 | 1.2 | 121 | 0 |
| F12 | | | | | | 3.0 | 120 | 0 |
| F13 | | | | | 300 | 1.2 | 119 | 10 |
| F14 | | | | | | 3.0 | 120 | 0 |
| F15 | | | | | 500 | 1.2 | 111 | 10 |
| F16 | | | | | | 3.0 | 109 | 0 |

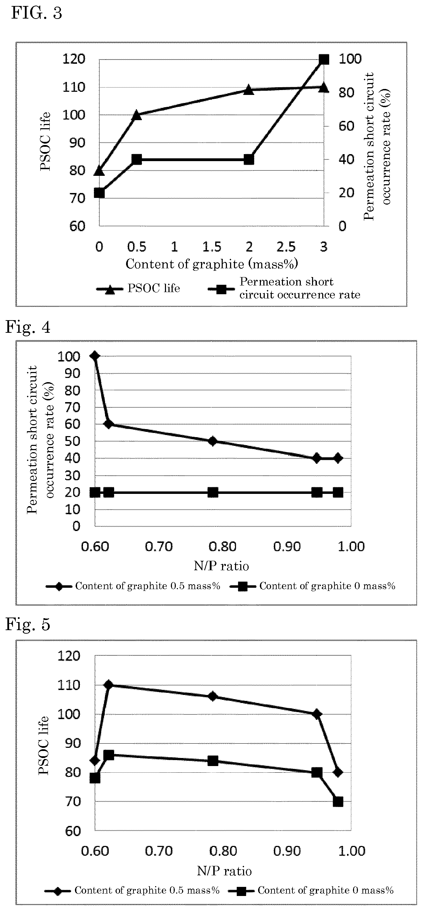

Fig. 3 and Table 3 show that inclusion of graphite in the negative active material improves the PSOC life, and that inclusion of 0.5 mass% or more of graphite significantly improves the PSOC life. On the other hand, it can be seen that inclusion of graphite in the negative active material causes a permeation short circuit to easily occur. It was not known that inclusion of graphite in the negative active material causes a permeation short circuit to easily occur as described above.

Thus, the present inventors conducted studies on inhibition of occurrence of a permeation short circuit while graphite is included in the negative active material to improve the PSOC life. As a result, it has been found that even when the negative active material contains graphite, an N/P ratio of 0.62 or more can inhibit a permeation short circuit (Fig. 4). Meanwhile, when the negative active material does not contain graphite, the effect of inhibiting a permeation short circuit cannot be obtained even when the N/P ratio is 0.62 or more (Fig. 4). Thus, the effect of inhibiting a permeation short circuit due to an N/P ratio of 0.62 or more is obtained only when the negative active material contains graphite. It was not known that graphite in the negative active material relates to a permeation short circuit, nor that the N/P ratio relates to a permeation short circuit. Thus, it was not foreseeable that using an N/P ratio of 0.62 or more when the negative active material contains graphite could produce an effect of inhibiting a permeation short circuit, and it is not easy for a person skilled in the art to get an idea of using an N/P ratio of 0.62 or more to inhibit a permeation short circuit, which occurs more easily by including graphite in the negative active material.

Fig. 4 shows that when the negative active material contains graphite, changing the N/P ratio from 0.6 to 0.62 markedly decreases the permeation short circuit occurrence rate. It was obviously not foreseeable that the N/P ratios of 0.6 and 0.62 have distinctly different effects of inhibiting a permeation short circuit as described above, and it can be said that an N/P ratio of 0.62 or more has a meaning as a critical point.

Fig. 5 shows that inclusion of graphite in the negative active material improves the PSOC life, and that an N/P ratio in a range of 0.62 or more and 0.95 or less improves the PSOC life. More particularly, considering the fact that inclusion of graphite in the negative active material and an N/P ratio in a range of 0.62 or more and 0.95 or less together markedly improve the PSOC life, it is found that the combination of inclusion of graphite in the negative active material and an N/P ratio in a range of 0.62 or more and 0.95 or less can provide a synergetic effect (Fig. 5). An N/P ratio in a range of 0.62 or more and 0.78 or less further significantly improves the PSOC life.

Fig. 3 shows that a content of graphite in the negative active material of 2.5 mass% or less can inhibit a permeation short circuit. Since it was not known that graphite in the negative active material relates to occurrence of a permeation short circuit, it is not easy for a person skilled in the art to get an idea of using a content of graphite in the negative active material of 2.5 mass% or less to inhibit a permeation short circuit. In addition, Fig. 3 shows that a content of graphite in the negative active material of 2.5 mass% or less markedly decreases the permeation short circuit occurrence rate. Thus, it can be said that a content of graphite in the negative active material of 2.5 mass% or less has a meaning as a critical point. A content of graphite in the negative active material of 2.0 mass% or less has a larger effect of inhibiting a permeation short circuit.

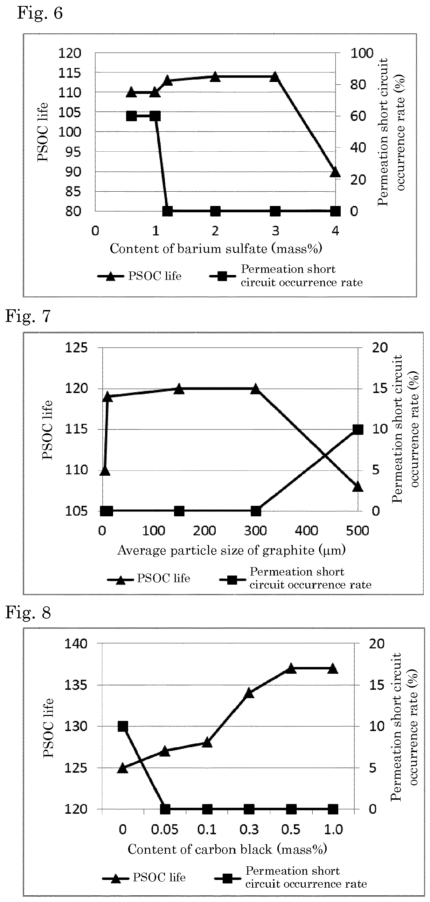

Table 3 and Fig. 6 show that inclusion of barium sulfate in the negative active material produces an effect of inhibiting a permeation short circuit. Since it was not known that barium sulfate in the negative active material relates to a permeation short circuit, it was an unexpected result that inclusion of barium sulfate in the negative active material produced an effect of inhibiting a permeation short circuit. In particular, a content of barium sulfate in the negative active material of 1.2 mass% or more markedly improves the effect of inhibiting a permeation short circuit (Fig. 6). Thus, it can be said that a content of barium sulfate in the negative active material of 1.2 mass% or more has a meaning as a critical point.

Table 3 and Fig. 6 show that inclusion of barium sulfate in the negative active material of more than 3.0 mass% markedly decreases the PSOC life. Thus, the content of barium sulfate in the negative active material is 3.0 mass% or less.

It can be seen that a content of graphite in the negative active material of 2.5 mass% or less, a content of barium sulfate in the negative active material of 1.2 mass% or more, and an N/P ratio of 0.62 or more can yield a lead-acid battery having PSOC life performance higher than that of a lead-acid battery not containing graphite in the negative active material, and having excellent permeation short circuit resistance performance (e.g., samples B2 to B4 of Table 3). If any one of the content of graphite and the content of barium sulfate in the negative active material and the N/P ratio is outside the value range described above, a permeation short circuit cannot be sufficiently inhibited.

For example, even when the content of barium sulfate in the negative active material is 1.2 mass% or more, and the N/P ratio is 0.62 or more, a permeation short circuit may not be sufficiently inhibited if the content of graphite in the negative active material is more than 2.5 mass% (e.g., samples B30 and B31 of Table 3). In addition, even when the content of graphite in the negative active material is 2.5 mass% or less, and the N/P ratio is 0.62 or more, a permeation short circuit may not be sufficiently inhibited if the content of barium sulfate in the negative active material is less than 1.2 mass% (e.g., samples B1 and B9 of Table 3). Similarly, even when the content of graphite in the negative active material is 2.5 mass% or less, and the content of barium sulfate in the negative active material is 1.2 mass% or more, a permeation short circuit may not be sufficiently inhibited if the N/P ratio is less than 0.62 (sample B14 of Table 3). Thus, concludingly, the combination of three configurations, that is, a content of graphite in the negative active material of 2.5 mass% or less, a content of barium sulfate in the negative active material of 1.2 mass% or more, and an N/P ratio of 0.62 or more, is required to sufficiently inhibit a permeation short circuit.

Since it was not known that graphite in the negative active material relates to a permeation short circuit, it is not easy for a person skilled in the art to get an idea of using a content of graphite in the negative active material of 2.5 mass% or less to inhibit a permeation short circuit. Moreover, since it was not known that barium sulfate in the negative active material relates to a permeation short circuit, it is not easy for a person skilled in the art to get an idea of using a content of barium sulfate in the negative active material of 1.2 mass% or less to inhibit a permeation short circuit. Furthermore, since it was also not known that the N/P ratio relates to a permeation short circuit, it is not easy for a person skilled in the art to get an idea of using an N/P ratio of 0.62 or more to inhibit a permeation short circuit. Since it is not easy for a person skilled in the art to get each of the ideas of using a content of graphite in the negative active material of 2.5 mass% or less, using a content of barium sulfate in the negative active material of 1.2 mass% or less, and using an N/P ratio of 0.62 or more, it is very difficult for a person skilled in the art to conceive of combining these three configurations.

Table 4 shows that also when expanded graphite was used as graphite, the results obtained were approximately the same as those obtained when scalelike graphite was used as graphite.

Table 3 shows that even when the content of graphite in the negative active material is 2.5 mass% or less, the content of barium sulfate in the negative active material is 1.2 mass% or more, and the N/P ratio is 0.62 or more, a permeation short circuit may not be completely inhibited (e.g., sample B27 of Table 3). Thus, the present inventors have conducted studies on further inhibiting a permeation short circuit.

**[Table 5]**

| Battery no. | Mass of positive active material (g/cell) | Mass of negative active material (g/cell) | N/P ratio | Scalelike graphite | | BaSO₄ | PSOC life Number of cycles (ratio to A1 defined as 100) | Permeation short circuit occurrence rate (%) |
|---|---|---|---|---|---|---|---|---|
| | | | | Content (%) | Average particle size (µm) | Content (%) | | |
| A16 | 338 | 320 | 0.95 | 0.5 | 5 | 0.6 | 96 | 30 |
| A17 | | | | | 10 | | 101 | 40 |
| A1 | | | | | 150 | | 100 | 40 |
| A18 | | | | | 300 | | 100 | 40 |
| A19 | | | | | 500 | | 95 | 50 |
| A20 | 375 | 294 | 0.78 | 0.5 | 5 | 0.6 | 108 | 50 |
| A2 | | | | | 150 | | 106 | 50 |
| A21 | | | | | 500 | | 107 | 70 |
| A22 | 420 | 261 | 0.62 | 2.0 | 5 | 0.6 | 115 | 50 |
| A23 | | | | | 10 | | 119 | 60 |
| A13 | | | | | 150 | | 121 | 60 |
| A24 | | | | | 300 | | 120 | 60 |
| A25 | | | | | 500 | | 113 | 70 |
| C1 | 338 | 320 | 0.95 | 0.5 | 5 | 1.2 | 99 | 0 |
| C2 | | | | | | 3.0 | 98 | 0 |
| C3 | | | | | 10 | 1.2 | 104 | 0 |
| C4 | | | | | | 3.0 | 106 | 0 |
| B2 | | | | | 150 | 1.2 | 104 | 0 |
| B4 | | | | | | 3.0 | 106 | 0 |
| C5 | | | | | 300 | 1.2 | 104 | 0 |
| C6 | | | | | | 3.0 | 105 | 0 |
| C7 | | | | | 500 | 1.2 | 100 | 0 |
| C8 | | | | | | 3.0 | 99 | 0 |
| C9 | 375 | 294 | 0.78 | 2.0 | 5 | 1.2 | 110 | 0 |
| C10 | | | | | | 3.0 | 109 | 0 |
| C11 | | | | | 10 | 1.2 | 119 | 0 |
| C12 | | | | | | 3.0 | 121 | 0 |
| B23 | | | | | 150 | 1.2 | 120 | 0 |
| B24 | | | | | | 3.0 | 122 | 0 |
| C13 | | | | | 300 | 1.2 | 120 | 0 |
| C14 | | | | | | 3.0 | 121 | 0 |
| C15 | | | | | 500 | 1.2 | 108 | 10 |
| C16 | | | | | | 3.0 | 107 | 0 |
| C17 | 420 | 261 | 0.62 | 2.0 | 5 | 1.2 | 119 | 0 |
| C18 | | | | | | 3.0 | 120 | 0 |
| C19 | | | | | 10 | 1.2 | 123 | 0 |
| C20 | | | | | | 3.0 | 125 | 0 |
| B27 | | | | | 150 | 1.2 | 125 | 10 |
| B28 | | | | | | 3.0 | 126 | 0 |
| C21 | | | | | 300 | 1.2 | 123 | 10 |
| C22 | | | | | | 3.0 | 124 | 0 |
| C23 | | | | | 500 | 1.2 | 118 | 10 |
| C24 | | | | | | 3.0 | 118 | 0 |

Table 5 and Fig. 7 show effects of the average particle size of graphite in the negative active material. It can be seen that an average particle size of graphite in the negative active material of 300 µm or less can inhibit a permeation short circuit. It was an unexpected result that use of an average particle size of graphite in the negative active material of 300 µm or less can inhibit a permeation short circuit. More particularly, a content of graphite in the negative active material of 2.5 mass% or less, a content of barium sulfate in the negative active material of 1.2 mass% or more, an N/P ratio of 0.62 or more, and an average particle size of graphite in the negative active material of 300 µm or less can together yield a lead-acid battery in which occurrence of a permeation short circuit is almost completely inhibited. It was not known that the average particle size of graphite in the negative active material relates to a permeation short circuit. Thus, even if a person skilled in the art attempts to obtain a lead-acid battery having excellent permeation short circuit resistance performance, a large number of trial-and-error steps are required to get the ideas of using a content of graphite in the negative active material of 2.5 mass% or less, using a content of barium sulfate in the negative active material of 1.2 mass% or more, using an N/P ratio of 0.62 or more, and using an average particle size of graphite in the negative active material of 300 µm or less. Such a combination of ideas cannot occur easily.

Table 5 and Fig. 7 show that an average particle size of graphite in the negative active material of 10 µm or more markedly improves the PSOC life.

**[Table 6]**

| Battery no. | Mass of positive active material (g/cell) | Mass of negative active material (g/cell) | N/P ratio | Graphite | | | BaSO₄ | Carbon black | PSOC life Number of cycles (ratio to A1 defined as 100) | Permeation short circuit occurrence rate (%) |
|---|---|---|---|---|---|---|---|---|---|---|
| | | | | Type | Content (%) | Average particle size (µm) | Content (%) | Content (%) | | |
| B27 | 420 | 261 | 0.62 | Scalelike | 2.0 | 150 | 1.2 | 0 | 125 | 10 |
| G1 | | | | | | | | 0.05 | 127 | 0 |
| G2 | | | | | | | | 0.1 | 128 | 0 |
| G3 | | | | | | | | 0.3 | 134 | 0 |
| G4 | | | | | | | | 0.5 | 137 | 0 |
| G5 | | | | | | | | 1.0 | 137 | 0 |
| G6 | 375 | 294 | 0.78 | Scalelike | 1.5 | 300 | 1.2 | 0 | 120 | 10 |
| G7 | | | | | | | | 0.05 | 123 | 0 |
| G8 | | | | | | | | 0.5 | 131 | 0 |

Table 6 and Fig. 8 show effects of carbon black in the negative active material. It can be seen that inclusion of carbon black in the negative active material can inhibit a permeation short circuit. It was an unexpected result that inclusion of carbon black in the negative active material can inhibit a permeation short circuit. More particularly, it can be seen that a content of graphite in the negative active material of 2.5 mass% or less, a content of barium sulfate in the negative active material of 1.2 mass% or more, an N/P ratio of 0.62 or more, and inclusion of carbon black in the negative active material can together yield a lead-acid battery in which occurrence of a permeation short circuit is almost completely inhibited. It was not known that carbon black in the negative active material relates to a permeation short circuit. Thus, even if a person skilled in the art attempts to obtain a lead-acid battery having excellent permeation short circuit resistance performance, a large number of trial-and-error steps are required to get the ideas of using a content of graphite in the negative active material of 2.5 mass% or less, using a content of barium sulfate in the negative active material of 1.2 mass% or more, using an N/P ratio of 0.62 or more, and including carbon black in the negative active material. Such a combination of ideas cannot occur easily.

The effect of carbon black of inhibiting a permeation short circuit is noticeable when the content of carbon black in the negative active material is 0.05 mass% or more (Fig. 8). Meanwhile, inclusion of carbon black in the negative active material of more than 1.0 mass% made the active material paste too hard to fill therewith the negative electrode current collector.

A content of carbon black in the negative active material of 0.1 mass% or more produces a larger effect of improving the PSOC life than when the content of carbon black in the negative active material is less than 0.1 mass% (Fig. 8). A content of carbon black in the negative electrode material of 0.5 mass% or more produces an especially large effect of improving the PSOC life. Note that the electrolyte solutions of Table 6 did not contain aluminum ions nor lithium ions. Scalelike graphite was used as graphite in Table 6, but similar results were obtained when expanded graphite was used.

**[Table 7]**

| Battery no. | Mass of positive active material (g/cell) | Mass of negative active material (g/cell) | N/P ratio | Graphite | | | BaSO₄ | Al | Li | PSOC life Number of cycles (ratio to A1 defined as 100) | Permeation short circuit occurrence rate (%) |
|---|---|---|---|---|---|---|---|---|---|---|---|
| | | | | Type | Content (%) | Average particle size (µm) | Content (%) | Content (mol/L) | Content (mol/L) | | |
| B27 | 420 | 261 | 0.62 | Scalelike | 2.0 | 150 | 1.2 | 0 | 0 | 125 | 10 |
| H1 | | | | | | | | 0.02 | | 138 | 10 |
| H2 | | | | | | | | 0.1 | | 142 | 10 |
| H3 | | | | | | | | 0.2 | | 139 | 10 |
| H4 | | | | | | | | 0.3 | | 125 | 10 |
| H5 | | | | | | | | 0 | 0.02 | 125 | 0 |
| H6 | | | | | | | | | 0.1 | 127 | 0 |
| H7 | | | | | | | | | 0.2 | 127 | 0 |
| H8 | | | | | | | | | 0.3 | 124 | 0 |
| H9 | | | | | | | | 0.02 | 0.02 | 140 | 0 |
| H10 | | | | | | | | 0.2 | 0.2 | 140 | 0 |

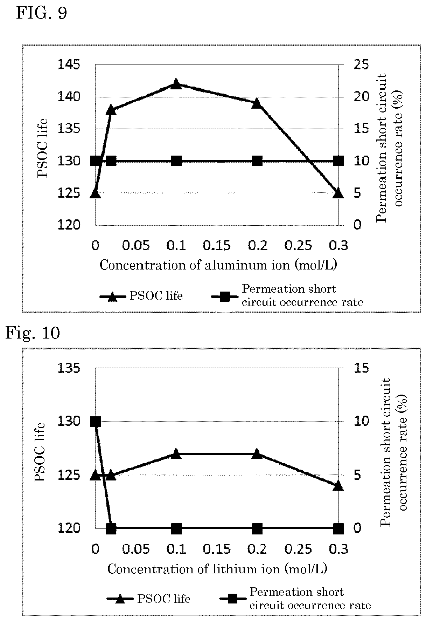

Table 7 shows effects of aluminum ions and effects of lithium ions in the electrolyte solution. In Table 7, the negative active material did not contain carbon black. Scalelike graphite was used as graphite in Table 7, but similar results were obtained when expanded graphite was used. Inclusion of aluminum ions in the electrolyte solution improves the PSOC life (samples H1 to H4 of Table 7, and Fig. 9). Inclusion of 0.02 mol/L or more of aluminum ions in the electrolyte solution significantly improves the PSOC life (samples H1 to H4 of Table 7, and Fig. 9). Inclusion of 0.2 mol/L or less of aluminum ions in the electrolyte solution also significantly improves the PSOC life (samples H1 to H4 of Table 7, and Fig. 9).

Table 7 and Fig. 10 show that inclusion of lithium ions in the electrolyte solution can inhibit a permeation short circuit. More particularly, a content of graphite in the negative active material of 2.5 mass% or less, a content of barium sulfate in the negative active material of 1.2 mass% or more, an N/P ratio of 0.62 or more, and inclusion of lithium ions in the electrolyte solution together yielded a lead-acid battery in which occurrence of a permeation short circuit was almost completely inhibited. Even if a person skilled in the art attempts to obtain a lead-acid battery having excellent permeation short circuit resistance performance, a large number of trial-and-error steps are required to get the ideas of using a content of barium sulfate in the negative active material of 1.2 mass% or more, using an N/P ratio of 0.62 or more, and including lithium ions in the electrolyte solution. Such a combination of ideas cannot occur easily. The effect of inhibiting a permeation short circuit by lithium ions is noticeable when the concentration of lithium ions in the electrolyte solution is 0.02 mol/L or more.

Inclusion of 0.1 mol/L or more of lithium ions in the electrolyte solution improves the PSOC life (samples H5 to H8 of Table 7, and Fig. 10). In addition, inclusion of 0.2 mol/L or less of lithium ions in the electrolyte solution improves the PSOC life (samples H5 to H8 of Table 7, and Fig. 10).

Inclusion of both aluminum ions and lithium ions in the electrolyte solution can inhibit a permeation short circuit, and significantly improves the PSOC life (samples H9 and H10 of Table 7).

In Example, a lead-acid battery which is excellent in PSOC life and suffers little permeation short circuit is obtained, and a glass mat etc. may be used as a separator to produce a valve-regulated lead-acid battery.

## Claims

1. A lead-acid battery comprising:
a negative electrode plate;
a positive electrode plate; and
an electrolyte solution,
wherein the negative electrode plate includes a negative electrode material containing graphite or carbon fiber,
a ratio N/P of a mass N of the negative electrode material to a mass P of a positive electrode material per lead-acid battery is 0.62 or more,
the negative electrode material contains 1.75 mass% or less of elemental barium in a fully-charged condition,
the ratio N/P is 0.95 or less, and
the negative electrode material contains 2.5 mass% or less of graphite or 2.5 mass% or less of carbon fiber.

2. The lead-acid battery according to claim 1, wherein the negative electrode material contains barium sulfate.

3. The lead-acid battery according to claim 1, wherein the negative electrode material contains elemental barium.

4. The lead-acid battery according to claim 2, wherein the negative electrode material contains 1.2 mass% or more of barium sulfate.

5. The lead-acid battery according to claim 1, wherein the negative electrode material contains 0.7 mass% or more of elemental barium.

6. The lead-acid battery according to any one of claims 2 to 5, wherein the negative electrode material contains 3.0 mass% or less of barium sulfate.

7. The lead-acid battery according to any one of claims 1 to 6, wherein the negative electrode material contains carbon black.

8. The lead-acid battery according to any one of claims 1 to 7, wherein the graphite or the carbon fiber is graphite having an average particle size of 300 µm or less.

9. The lead-acid battery according to any one of claims 1 to 8, wherein the graphite or the carbon fiber is graphite having an average particle size of 10 µm or more.

10. The lead-acid battery according to any one of claims 1 to 9, wherein the electrolyte solution contains aluminum ions.

11. The lead-acid battery according to any one of claims 1 to 10, wherein the electrolyte solution contains lithium ions.

12. The lead-acid battery according to any one of claims 1 to 11, wherein the ratio N/P is 0.78 or less.

## Patentansprüche

1. Blei-Säure-Batterie, umfassend:
eine negative Elektrodenplatte;
eine positive Elektrodenplatte; und
eine Elektrolytlösung,
wobei die negative Elektrodenplatte ein negatives Elektrodenmaterial umfasst, das Graphit oder Kohlefaser umfasst,
ein Verhältnis N/P einer Masse N des negativen Elektrodenmaterials zu einer Masse P eines positiven Elektrodenmaterials pro Blei-Säure-Batterie 0,62 oder mehr beträgt,
das negative Elektrodenmaterial 1,75 Massen-% oder weniger elementares Barium in einem vollständig geladenen Zustand umfasst,
das Verhältnis N/P 0,95 oder weniger beträgt und
das negative Elektrodenmaterial 2,5 Massen-% oder weniger Graphit oder 2,5 Massen-% oder weniger Kohlefaser umfasst.

2. Blei-Säure-Batterie nach Anspruch 1, wobei das negative Elektrodenmaterial Bariumsulfat umfasst.

3. Blei-Säure-Batterie nach Anspruch 1, wobei das negative Elektrodenmaterial elementares Barium umfasst.

4. Blei-Säure-Batterie nach Anspruch 2, wobei das negative Elektrodenmaterial 1,2 Massen-% oder mehr Bariumsulfat umfasst.

5. Blei-Säure-Batterie nach Anspruch 1, wobei das negative Elektrodenmaterial 0,7 Massen-% oder mehr elementares Barium umfasst.

6. Blei-Säure-Batterie nach einem der Ansprüche 2 bis 5, wobei das negative Elektrodenmaterial 3,0 Massen-% oder weniger Bariumsulfat umfasst.

7. Blei-Säure-Batterie nach einem der Ansprüche 1 bis 6, wobei das negative Elektrodenmaterial Ruß umfasst.

8. Blei-Säure-Batterie nach einem der Ansprüche 1 bis 7, wobei der Graphit oder die Kohlenstofffaser Graphit mit einer durchschnittlichen Teilchengröße von 300 µm oder weniger ist.

9. Blei-Säure-Batterie nach einem der Ansprüche 1 bis 8, wobei der Graphit oder die Kohlenstofffaser Graphit mit einer durchschnittlichen Teilchengröße von 10 µm oder mehr ist.

10. Blei-Säure-Batterie nach einem der Ansprüche 1 bis 9, wobei die Elektrolytlösung Aluminiumionen umfasst.

11. Blei-Säure-Batterie nach einem der Ansprüche 1 bis 10, wobei die Elektrolytlösung Lithiumionen umfasst.

12. Blei-Säure-Batterie nach einem der Ansprüche 1 bis 11, wobei das Verhältnis N/P 0,78 oder weniger beträgt.

## Revendications

1. Batterie plomb-acide comprenant :
une plaque d'électrode négative ;
une plaque d'électrode positive ; et
une solution d'électrolyte,
la plaque d'électrode négative comprenant un matériau d'électrode négative contenant du graphite ou de la fibre de carbone,
un rapport N/P d'une masse N du matériau d'électrode négative à une masse P d'un matériau d'électrode positive par batterie plomb-acide est de 0,62 ou plus,
le matériau d'électrode négative contient 1,75 % en masse ou moins de baryum élémentaire dans un état complètement chargé,
le rapport N/P est de 0,95 ou moins, et
le matériau d'électrode négative contient 2,5 % en masse ou moins de graphite ou 2,5 % en masse ou moins de fibre de carbone.

2. Batterie plomb-acide selon la revendication 1, dans laquelle le matériau d'électrode négative contient du sulfate de baryum.

3. Batterie plomb-acide selon la revendication 1, dans laquelle le matériau d'électrode négative contient du baryum élémentaire.

4. Batterie plomb-acide selon la revendication 2, dans laquelle le matériau d'électrode négative contient 1,2 % en masse ou plus de sulfate de baryum.

5. Batterie plomb-acide selon la revendication 1, dans laquelle le matériau d'électrode négative contient 0,7 % en masse ou plus de baryum élémentaire.

6. Batterie plomb-acide selon l'une quelconque des revendications 2 à 5, dans laquelle le matériau d'électrode négative contient 3,0 % en masse ou moins de sulfate de baryum.

7. Batterie plomb-acide selon l'une quelconque des revendications 1 à 6, dans laquelle le matériau d'électrode négative contient du noir de charbon.

8. Batterie plomb-acide selon l'une quelconque des revendications 1 à 7, dans laquelle le graphite ou la fibre de carbone est un graphite ayant une taille de particule moyenne de 300 µm ou moins.

9. Batterie plomb-acide selon l'une quelconque des revendications 1 à 8, dans laquelle le graphite ou la fibre de carbone est un graphite ayant une taille moyenne de particule de 10 µm ou plus.

10. Batterie plomb-acide selon l'une quelconque des revendications 1 à 9, dans laquelle la solution d'électrolyte contient des ions aluminium.

11. Batterie plomb-acide selon l'une quelconque des revendications 1 à 10, dans laquelle la solution d'électrolyte contient des ions lithium.

12. Batterie plomb-acide selon l'une quelconque des revendications 1 à 11, dans laquelle le rapport N/P est de 0,78 ou moins.
